# EUROPÄISCHE PATENTSCHRIFT

(11) **EP 2 253 438 B1**
(45) Veröffentlichungstag und Bekanntmachung des Hinweises auf die Patenterteilung: **12.09.2012**
(21) Anmeldenummer: 09006670.5
(22) Anmeldetag: 18.05.2009
(51) Int. Cl.: B27B 5/065

(54) **Steuerung für eine Formatkreissäge**
Control for a format circular saw
Commande pour une scie circulaire de format

(43) Veröffentlichungstag der Anmeldung: 24.11.2010
(73) Patentinhaber: Wilhelm Altendorf GmbH & Co. KG, 32429 Minden (DE)
(72) Erfinder: Altendorf, Wilfried, 32429 Minden (DE); Tweer, Rolf, 32429 Minden (DE); Ruchatz, Jürgen, 32429 Minden (DE); Meyer, Wilfried, 32130 Enger (DE)
(74) Vertreter: Eisenführ, Speiser & Partner

(56) Entgegenhaltungen:
- DE-A1- 3 406 904
- DE-C1- 19 522 717
- DE-T2- 60 301 906
- US-A1- 2005 277 104

## Beschreibung

Die Erfindung betrifft Steuerungsvorrichtung für eine Formatkreissäge, umfassend eine graphische Ausgabeeinheit zur Anzeige von Betriebsdaten an einen Benutzer, eine Schnittstelle zur Eingabe von Werkstückabmessungen, einen mit der graphischen Ausgabeeinheit und der Schnittstelle signaltechnisch verbundenen Steuerungsrechner zur Steuerung von Betriebsdaten der Formatkreissäge. Ein weiterer Aspekt der Erfindung ist eine Formatkreissäge mit einer solchen Steuerungsvorrichtung und ein Verfahren zur Steuerung einer Formatkreissäge.

Formatkreissägen werden dazu eingesetzt, um großformatige Werkstückplatten, insbesondere aus Holzwerkstoffen, Massivholz, Kunststoff oder Leichtmetall, zu zerteilen, um hierdurch mehrere Werkstückabschnitte definierter Abmessung herzustellen. Formatkreissägen sind in unterschiedlichen Bauweisen bekannt. Grundsätzlich wird zwischen Formatkreissägen unterschieden, bei denen das Werkstück auf einem Laufwagen entlang eines rotierenden, in der Achse feststehenden Sägeblatts entlanggeführt wird und solchen Formatkreissägen, bei denen das Werkstück fixiert gehalten wird und das Kreissägeblatt beweglich geführt ist und zur Durchführung des Sägeschnitts am Werkstück entlanggeführt wird. Letztere Formatkreissägen werden auch als Plattensägen bezeichnet und sind als Ausführungen bekannt, bei denen das Sägeblatt an einem Portal oberhalb der Werkstückauflage geführt ist und als Ausführungen bei denen das Sägeblatt unterhalb der Werkstückauflage geführt ist.

Grundsätzlich kann mit Formatkreissägen ein sehr hohes Maß an Genauigkeit bei der Ausführung eines Schnitts erzielt werden. Den Benutzer unterstützen hierbei bei vielen Ausführungsformen eine Anschlagschiene oder andere Referenzpunkte, an denen das Werkstück angelegt werden kann, um eine exakte Winkeldefinition zu erreichen und ggf. darüberhinaus Anschlagklappen, welche ein definiertes Maß in Bezug auf die Sägeblattebene festlegen. Um die gewünschte Genauigkeit zu erreichen, muss der Benutzer oftmals zuvor die Anschlagschiene und Anschlagklappe auf das gewünschte Maß einstellen und das Werkstück in der gewünschten Weise positionieren und ausrichten, damit hiernach der Sägeschnitt in der gewünscht präzisen Weise ausgeführt werden kann.

In vielen Anwendungen wird aus einem großformatigen Werkstück, beispielsweise einem Ausgangshalbzeug mit den Standardmassen von ca. 3x2m, eine Vielzahl von Werkstückabschnitten hergestellt. In einem solchen Fall ist es wünschenswert, die einzelnen Werkstückabschnitte solcher Art innerhalb des Werkstücks aufzuteilen, dass möglichst wenig Verschnitt entsteht und somit das Ausgangs-Werkstück in idealer Weise genutzt wird.

Es ist bekannt, zu diesem Zweck vom Benutzer die Masse der gewünschten Werkstückabschnitte eingeben zu lassen und hierauf folgend in einem Optimierungsprozess die Werkstückplatte solcher Art aufzuteilen, dass die gewünschten Werkstückabschnitte unter größtmöglicher Vermeidung von Verschnitt aus dem Werkstück geschnitten werden können. Bei dieser Art des Zuschnitts entsteht in der Regel ein vorgegebenes und einzuhaltendes Muster an Sägeschnitten, die häufig parallel zu den Außenkanten, gegebenfalls aber auch unter schrägen Winkeln hierzu und zueinander durch das Werkstück laufen. Diese Sägeschnitte sind aufeinanderfolgend auszuführen, um die gewünschten Werkstückabschnitte zu erhalten.

Aus DE 3406904 ist eine Vorrichtung und ein Verfahren zum Zuschneiden von Plattengut bekannt. Hierbei wird mittels eines Lasergerätes ein schmaler Strich auf das Plattengut projiziert und ein Verstellweg des Lasergeräts erfasst, um einen Schnitt entlang einer nicht verwendbare Stelle des Plattenguts auszuführen. Der Oberbegriff von Anspruch 1 basiert auf diesen Dokument.

Aus DE 60301906 T2 ist eine Vorrichtung zur Darstellung der Messung von Schrägschnitten auf Platten bekannt, welche in einer Disptayeinheit, die an eine Speicher- und Recheneinheit angeschlossen ist einen Parameter anzeigt. Die Parameter kann ein Wert sein, der eine Positionierung einer verschiebbaren Anschlagleiste definiert.

Aus US 2005/0277104 A1 ist eine automatische Schneidemaschine zum Schneiden eines Blattmaterials wie Stoff oder Strick- oder Wirkware bekannt, bei dem die Positlonierung mehrerer auszuschneidender Teilstücke in einem Ausgangsmaterial auf einem Display angezeigt wird.

Das Berechnen, Positionieren, Ausrichten und entsprechendes Anlegen dieser Werkstücke und Werkstückabschnitte auf der Werkstückauflagefläche und an der Anschlagschiene und ggfs. Anschlagklappe erfordert regelmäßig eine gewisse Zeit und verzögert daher insgesamt den Arbeitsablauf. Zudem sind diese Vorgänge fehlerträchtig, da durch Verwechslung von Werkstückabschnitten oder falsches Anlegen oder Positionieren von Werkstückabschnitten ein fehlerhafter Schnitt ausgeführt werden könnte.

Es ist das Ziel der Erfindung, diese Arbeitsabläufe sowohl hinsichtlich der Bediensicherheit als auch der Arbeitsgeschwindigkeit zu verbessern.

Dieses Ziel wird erfindungsgemäß erreicht, indem der Steuerungsrechner ausgebildet ist, um aus den von der Schnittstelle erhaltenen Werkstückabmessungen zu berechnen, in welcher Position und Ausrichtung das Werkstück auf eine Auflagefläche einer Formatkreissäge aufgelegt werden muss und um Daten, welche diese Position bzw. Ausrichtung charakterisieren, an die graphische Anzeige zu übermitteln und dass die graphische Anzeige ausgebildet ist, um einem Benutzer diese Position und Ausrichtung anzuzeigen.

Mit der erfindungsgemäßen Steuerungsvorrichtung wird es möglich, dem Benutzer einer Formatkreissäge die Position und Ausrichtung eines Werkstücks oder Werkstückabschnitts in einfach nachvollziehbarer Weise auf einer graphischen Ausgabeeinheit anzuzeigen, bevor der Sägeschnitt an diesem Werkstück bzw. Werkstückabschnitt ausgeführt wird.

Unter einem Werkstück soll in diesem Zusammenhang ein nichtzugeschnittenes Halbzeugmaterial, üblicherweise eine großformatige Platte in handelsüblicher Abmessung, verstanden werden.

Unter einem Werkstückabschnitt soll in diesem Zusammenhang ein von einem solchen Werkstück mittels zumindest eines Sägeschnitts abgetrennter Teil verstanden werden, der bereits in seinen endgültigen Fertigmassen vorliegen kann oder der durch einen oder mehrere nachfolgende Sägeschnitte weiter unterteilt werden muss, um in Werkstückabschnitte mit ihren endgültigem Fertigmassen zugeschnitten zu werden.

Unter der Position eines Werkstücks bzw. Werkstückabschnitts soll erfindungsgemäß der Ort verstanden werden, an dem ein Werkstück bzw. Werkstückabschnitt auf der Werkstückauflage in Bezug auf das Kreissägeblatt angeordnet sein muss, um mit dem Sägeschnitt das gewünschte Maß herzustellen.

Unter einer Ausrichtung soll erfindungsgemäß die Verschwenkungslage eines Werkstücks oder Werkstückabschnitts um eine senkrecht zu seiner Fläche liegende Achse verstanden werden. Insbesondere ist unter Ausrichtung zu verstehen die Definition derjenigen seitlichen Kante eines Werkstücks oder Werkstückabschnitts, welche an einer Anschlagschiene angelegt werden soll, um den nachfolgenden Sägeschnitt mit dem gewünschten Maß ausführen zu können.

Die erfindungsgemäße Steuerungsvorrichtung kann somit nicht nur die ideale Aufteilung eines Werkstücks in mehrere Werkstückabschnitte berechnen, sondern erleichtert darüber hinaus insbesondere auch die zeitlich effizienteste Durchführung der Abfolge von Sägeschnitten, die für diese Aufteilung des Werkstücks erforderlich sind und zeigt dem Benutzer hierzu jeweils an, wie er das Werkstück oder die daraus abgeteilten Werkstückabschnitte zu positionieren und auszurichten hat, um die Sägeschnitte nacheinander durchzuführen. Dabei ist zu verstehen, dass der Steuerungsrechner insbesondere auf ein Signal des Benutzers hin erst den Sägeschnitt freigibt oder startet, welches die korrekte Positionierung und Ausrichtung des Werkstücks/Werkstückabschnitts signalisiert. Insbesondere kann die graphische Ausgabeinheit dabei solcher Art ausgestaltet sein, dass sie eine schematische oder realistische Darstellung der Werkstückauflagefläche und der Anschlagkante darstellt und das Werkstück in seiner Abmessung auf dieser Werkstückauflagefläche in der erforderlichen Positionierung und Ausrichtung darstellt. Dabei kann insbesondere auch die Lage des Kreissägeblatts bzw. eines Sägeschlitzes angezeigt werden, der durchzuführende Sägeschnitt virtuell eingeblendet werden und ggf. darüber hinaus auch die weiteren nachfolgend auszuführenden oder bereits ausgeführten Sägeschnitte angezeigt werden. Insbesondere kann mittels der graphischen Ausgabeeinheit eine schematische oder realistische Darstellung der gesamten Formatkreissäge oder eines Ausschnitts der Formatkreissäge gemeinsam mit dem Werkstück oder Werlkstückabschnitt in der angestrebten Positionierung und/oder Ausrichtung ausgegeben werden.

Gemäß einer ersten bevorzugten Ausführungsform ist vorgesehen, dass die Schnittstelle zur Eingabe von Werkstückabmessungen eine Benutzerschnittstelle umfasst, mittels derer ein Benutzer Werkstückabmessungen digital eingeben kann. Mit dieser Fortbildungsform wird es in einfacher möglich, gewünschte Werkstückmaße unmittelbar über eine an der Steuerungsvorrichtung ausgebildete Benutzerschnittstelle einzugeben und dem Steuerungsrechner auf diese Weise die aus einem Werkstück oder Werkstückabschnitt herzustellenden einzelnen Platten einzugeben. Die Benutzerschnittstelle kann hierbei eine numerische Tastatur oder dergleichen sein oder sie kann in Baueinheit mit der graphischen Ausgabeeinheit als berührungsempfindlicher Bildschirm ausgeführt sein, was insbesondere in der staubbelasteten Umgebung eines holzverarbeitenden Unternehmens eine hohe Ausfallsicherheit und Bedienungssicherheit bereitstellt.

Alternativ oder ergänzend zu dieser Fortbildungsform ist vorzugsweise vorgesehen dass, die Schnittstelle zur Eingabe von Werkstückabmessungen eine Datenschnittstelle umfasst, mittels derer Werkstückabmessungen von einer externen Datenquelle, insbesondere einem CAD-CAM-Planungsrechner eingelesen werden können. Mit dieser Ausbildung wird eine vorzugsweise genormte Datenschnittstelle bereitgestellt, mittels welcher die erfindungsgemäße Steuerungsvorrichtung mit einem separaten Planungsrechner für eine Computer-unterstützte Planung und Herstellung verbunden werden kann. Aus dem Planungsrechner können auf diese Weise wie zuvor in dem Planungsvorgang die Maße und Daten für ein zu herzustellendes Bauteil, beispielsweise einem Schrank, Tisch oder dergleichen, in den Steuerungsrechner eingelesen und darin umgesetzt werden, um die hierfür benötigten Positionierung und Ausrichtung der Werkstücke/Werkstückabschnitte zu berechnen.

Gemäß einer noch weiteren Ausführungsform ist vorgesehen, dass der Steuerungsrechner ausgebildet ist, um Position und/oder Ausrichtung für die aufeinanderfolgende Durchführung mehrerer Sägeschnitte an einem Werkstück zu berechnen und nach jedem durchgeführten Sägeschnitt Daten, welche die Position bzw. Ausrichtung des Werkstücks für den darauf folgenden Sägeschnitt charakterisieren, an die graphische Anzeige zu übermitteln. Mit dieser Fortbildungsform wird eine schnelle Arbeitsfolge an einer Formatkreissäge ermöglicht, indem mehrere Sägeschnitte nacheinander durchgeführt werden und nach jedem Sägeschnitt dem Benutzer die für den folgenden Sägeschnitt erforderliche Positionierung und Ausrichtung des Werkstückabschnitts signalisiert wird. Die Anzeige kann hierbei, wie zuvor erläutert, insbesondere über die graphische Ausgabeeinheit in Form einer realistischen oder schematischen Visualisierung der Werkstückauflagefläche und des darauf angeordneten Werkstücks erfolgen.

Noch weiter ist es bevorzugt, dass der Steuerungsrechner ausgebildet ist, um eine für die Ausführung eines nachfolgenden Sägeschnittes einzustellende Position einer beweglichen Anschlagklappe zu berechnen und über die graphische Ausgabeeinheit auszugeben und/oder einen Aktuator zum Bewegen der Anschlagklappe so anzusteuem, dass dieser Aktuator die Anschlagklappe auf diese Position bewegt. Mit dieser Fortbildungsform wird über die Berechnung und Anzeige der Positionierung und Ausrichtung dem Benutzer auch die Einstellung einer Anschlagklappe erleichtert, indem ihm unmittelbar das einzustellende Maß für den nachfolgenden Sägeschnitt angezeigt wird oder, sofern die Anschlagklappe mittels Aktuators verfahrbar ist, dieser Aktuator so weit angesteuert wird, dass er auf das erforderliche Anschlagklappenmaß verfährt. Als Anschlagklappe ist hierbei insbesondere eine an einer Anschlagschiene angeordnete, entlang der Anschlagschiene verschiebliche Längsanschlagklappe zu verstehen, die eine Anlagefläche aufweist, die senkrecht zur Anlagefläche an der Anschlagschiene liegt.

Gemäß einer noch weiteren bevorzugten Ausführungsform ist vorgesehen, dass der Steuerungsrechner ausgebildet ist, um in einem ersten Bearbeitungsgang die für die Ausführung aufeinanderfolgender parallel liegender Sägeschnitte erforderliche Position und/oder Ausrichtung, des Werkstücks zu berechnen und über die graphische Anzeigeeinheit auszugeben und in einem zweiten Arbeitsgang die für die Ausführung aufeinanderfolgender parallel liegender Sägeschnitte an den im ersten Arbeitsgang hergestellten Werkstückabschnitten erforderliche Position und/oder Ausrichtung, des jeweiligen Werkstückabschnitts zu berechnen und über die graphische Anzeigeeinheit auszugeben. Mit dieser Ausgestaltung wird vom Steuerungsrechner eine für viele Anwendungen besonders schnelle Arbeitsweise berechnet, bei der das Werkstück vom Benutzer verhältnismäßig wenig bewegt werden muss, indem die Reihenfolge der Sägeschnitte solcher Art gewählt wird, dass parallel zueinander liegende Sägeschnitte in einem ersten Arbeitsgang ausgeführt werden und hierauf folgend die durch diese parallel liegenden Sägeschnitte hergestellten Werkstückabschnitte nachträglich unterteilt werden.

Alternativ oder zusätzlich kann hierzu in einer anderen bevorzugten Ausführungsform vorgesehen sein, dass der Steuerungsrechner ausgebildet ist, um
a. in einem ersten Bearbeitungsgang die für die Ausführung eines ersten Trennsägeschnitt zur Abtrennung eines ersten Werkstückabschnitts erforderliche Position und/oder Ausrichtung, des Werkstücks zu berechnen und über die graphische Anzeigeeinheit auszugeben ,
b. in einem zweiten Bearbeitungsgang die für die Ausführung zumindest eines an diesem ersten Werkstückabschnitt unter einem Winkel zum ersten Trennsägeschnitt an dem im ersten Bearbeitungsgang hergestellten Werkstückabschnitt durchzuführende Sägeschnitte erforderliche Position und/oder Ausrichtung, des ersten Werkstückabschnitts zu berechnen und über die graphische Anzeigeeinheit auszugeben,
c. in einem n-ten Bearbeitungsgang die für die Ausführung eines weiteren Trennsägeschnitt zur Abtrennung eines weiteren Werkstückabschnitts erforderliche Position und/oder Ausrichtung, des Werkstücks zu berechnen und über die graphische Anzeigeeinheit auszugeben ,
d. in einem n+1-ten Bearbeitungsgang die für die Ausführung zumindest eines an diesem weiteren Werkstückabschnitt unter einem Winkel zum weiteren Trennsägeschnitt an an dem im n-ten Bearbeitungsgang hergestellten weiteren Werkstückabschnitt durchzuführende Sägeschnitte erforderliche Position und/oder Ausrichtung, des weiteren Werkstückabschnitts zu berechnen und über die graphische Anzeigeeinheit auszugeben,
e. die Schritte c. und d. solange zu wiederholen, bis alle aus dem Werkstück herzustellenden Werkstückabschnitte zugeschnitten sind.

Diese Ausgestaltung vermeidet den Nachteil, dass eine Vielzahl von Werkstückabschnitten zwischengelagert werden muss, um einer nachfolgenden Schnittbearbeitung wieder zugeführt werden zu können. Stattdessen wird bei dieser Ausgestaltung eine Vorgehensweise eingeschlagen, bei der in möglichst direkter Weise aus dem Werkstück die endgültigen Maße der Werkstückabschnitte hergestellt werden. Hierbei wird in Kauf genommen, dass ein mehrmaliges Positionieren und Verschwenken von Werkstückabschnitten erforderlich ist und damit der Vorteil erzielt, dass insgesamt weniger Gefahr für eine Kantenbeschädigung der Werkstückabschnitte entsteht, da diese auf direktem Wege auf ihr Fertigmaß zugeschnitten werden und dann von der Werkstückauflagefläche entfernt werden können.

Dabei ist es, wenn der Steuerungsrechner zur Ausführung beider zuvor erläuterter Arbeitsweisen ausgebildet ist, insbesondere bevorzugt, dass durch eine Benutzerschnittstelle, welche mit dem Steuerungsrechner signaltechnisch gekoppelt ist und über die ein Benutzer eine Auswahl treffen kann, ob der Steuerungsrechner die Bearbeitung eines Werkstücks anhand der ersten definierten Bearbeitungsfolge oder anhand der zweiten definierten Bearbeitungsfolge durchführen soll. Durch diese Fortbildung wird es dem Benutzer möglich, je nach der Anordnung und Anzahl der Sägeschnitte und ggf. auch des Gewichts und der Empfindlichkeit des zu bearbeitenden Werkstücks zwischen der einen oder der anderen Vorgehensweise zu wählen und hierdurch die für den jeweiligen Zweck ideale Vorgehensweise einzuschlagen. Dabei ist zu verstehen, dass diese Wahl insbesondere über eine separate Benutzerschnittstelle oder über die zuvor bereits erläuterte Benutzerschnittstelle zur Eingabe von Bearbeitungsparametern und Werkstückmaßen erfolgen kann.

Noch weiter ist es bevorzugt, dass der Steuerungsrechner ausgebildet ist, um jedem durch die Ausführung der Sägeschnitte entstehenden Werkstückabschnitte eine Kennzeichnung zuzuordnen und diese Kennzeichnung zusammen mit der Position bzw. Ausrichtung des jeweiligen Werkstückabschnitts über die graphische Anzeigeeinheit auszugeben. Zwar ist es grundsätzlich bevorzugt, die Identifizierung der Werkstückabschnitte durch graphische Darstellung ihrer dem Bearbeitungsschritt entsprechenden Gestalt zu ermöglichen. Mit dieser Fortbildungsform wird darüberhinaus eine insoweit verwechslungssichere Kennzeichnung bereits zugeschnittener Werkstückabschnitte erreicht, indem jedem Werkstückabschnitt eine Kennzeichnung, beispielsweise eine Zahl oder ein Buchstabe oder eine Kombination hieraus, zugewiesen wird und diese in der graphischen Ausgabeeinheit zu dem Werkstückabschnitt angezeigt wird. Die Kennzeichnung kann auch in einem oder mehreren Kantenmaßen des Werkstücks/Werkstückabschnitts bestehen. Dies kann in besonders übersichtlicher Weise solcher Art erfolgen, dass die Kennzeichnung unmittelbar in das virtuell dargestellte Werkstück eingeblendet wird. Hierbei kann die Darstellung insbesondere dadurch in bedienungsfreundlicher Weise fortgebildet werden, dass sämtliche bereits zugeschnittenen Werkstückabschnitte dargestellt werden, ggf. in einem virtuellen Lagerraum abseits der Werkstückauflagefläche, und entsprechend mit ihrer Kennzeichnung dargestellt werden, um dem Benutzer jederzeit einen Überblick über die zugeschnittenen Werkstückabschnitte zu erlauben.

Gemäß einer noch weiteren bevorzugten Ausführungsform ist vorgesehen, dass der Steuerungsrechner mit einem Aktuator zur Steuerung der Vorschubgeschwindigkeit zwischen dem Kreissägeblatt und dem Werkstück signaltechnisch verbunden ist und ausgebildet ist, um die Position des Eintritts und/oder des Austritts des Kreissägeblatts in das bzw. aus dem Werkstück zu berechnen und die Vorschubgeschwindigkeit beim Eintritt des Kreissägeblatts in das Werkstück und/oder beim Austritts des Kreissägeblatts aus dem Werkstück gegenüber der Vorschubgeschwindigkeit zwischen Ein- und Austritt zu verringern. Diese Fortbildung ermöglicht es einerseits, dass der Steuerungsrechner, ggf. nach Detektion oder Signalisierung der korrekten Position und Ausrichtung des Werkstücks/Werkstückabschnitts, den Sägevorgang startt und hierbei die Vorschubgeschwindigkeit regelt. Die spezifische Ausgestaltung mit geschwindigkeitsreduziertem Eintauchen und Austauchen in das bzw. aus dem Werkstück bewirkt eine verbesserte Schnittqualität im Bereich des Ein- und Austritts des Sägeblatts und vermeidet Ausbrüche aus dem Werkstück an diesen Stellen. Dabei ist insbesondere als bevorzugt anzusehen, dass die erfindungsgemäße Steuerungsvorrichtung zur genauen Erfassung der Lage der Werkstückkanten, an denen das Sägeblatt in das Werkstück eintritt bzw. aus diesem austritt, nicht einer aufwendigen Sensorik bedarf, sondern die Lage dieser Kanten in Bezug auf den verfahrweg des Kreissägeblatts bereits rechnerisch ermittelt hat, indem die Abfolge der Sägeschnitte und die Positionierung und Ausrichtung der Werkstückabschnitte in definierter Abfolge vom Steuerungsrechner vorgegeben und in entsprechender Weise nachfolgend ausgeführt werden.

Gemäß einer weiteren bevorzugten Ausführungsform ist vorgesehen, dass der Steuerungsrechner ausgebildet ist, um aus Werkstückmaßen, welche einen Winkel - oder Gehrungsschnitt erforderlich machen, Sollpositionen einer Anschlagklappe und/oder einer Anschlagschiene zu berechnen und dem Benutzer über die graphische Ausgabeeinheit anzuzeigen. Diese Fortbildungsform adressiert eine spezifisch problematische Schnittaufgabe, welche üblicherweise eine exakte Berechnung des die Formatkreissäge bedienenden Benutzers erfordert. Gehrungs- oder Winkelschnitte sind Schnitte, die mit einem um eine horizontale Achse verschwenkten Sägeblatt durchgeführt werden oder Schnitte, die in einer nicht senkrecht zu einer Anlagekante bzw. Werkstückkante liegenden Richtung ausgeführt werden oder Kombinationen hieraus. Diese Art von Schnitten erfordert regelmäßig eine Berücksichtigung mehrerer geometrischer Winkel und Abmessungen, um die korrekten Werkstückabmessung und daraus folgenden Schnittmaße zu ermitteln.

Erfindungsgemäß wird dem Benutzer der Formatkreissäge diese Arbeit erleichtert, indem er gewünschte Winkel und Gehrungen unmittelbar eingeben kann und hierauf folgend vom Steuerungsrechner über die Ausgabeeinheit Positionierungswerte für eine Anschlagklappe oder Winkelausrichtungen für eine Anschlagschiene angezeigt bekommt, die für diesen Gehrungs- oder Winkelschnitt einzustellen sind. Dabei ist zu verstehen, dass in gleicher Weise, wie zuvor bezüglich der Anschlagklappe erläutert, die entsprechenden Werte und Winkel auch vom Steuerungsrechner automatisiert mittels eines Aktuators angefahren werden können, sofern eine entsprechend aktuatorbetätigte Bewegung des Anschlags/der Anschlagschiene vorgesehen ist.

Gemäß einer weiteren bevorzugten Ausführungsform ist vorgesehen, dass die graphische Ausgabeeinheit einen Bildschirm umfasst, der um eine Schwenkachse schwenkbar gelagert ist und dass der Steuerungsrechner mit einem Winkelsensor signaltechnisch verbunden ist, welcher die Schwenkposition des Bildschirms um die Schwenkachse erfasst und dass der Steuerungsrechner ausgebildet ist, um die Position und/oder Ausrichtung des Werkstücks auf der Werkstückablagefläche über die graphische Ausgabeeinheit entsprechend eines solchen Blickwinkels auszugeben, der dem Blickwinkel eines Benutzers entspricht, der vor dem Bildschirm in der erfassten Schwenkstellung steht. In vielen Anwendungsfällen ist es wünschenswert, dem Benutzer mehrere unterschiedliche Arbeitspositionen an der oder um die Formatkreissäge herum zu ermöglichen. Um von jeder dieser Arbeitspositionen einen Blick auf die graphische Ausgabeeinheit zu erlauben, kann diese insbesondere einen schwenkbaren Bildschirm umfassen, der dann jeweils so geschwenkt werden kann, dass seine Bildschirmfläche etwa senkrecht zur Blickrichtung des Benutzers auf den Bildschrim aus der jeweiligen Arbeitsposition ausgerichtet ist. Um auch bei einer solchen Ausgestaltung eine für den Benutzer leicht verständliche Darstellung zu erreichen, wird bei dieser Fortbildungsform eine Darstellung errechnet und ausgegeben, welche dem Blickwinkel des Benutzers auf die Werkstückauflagefläche bzw. die Formatkreissäge von der Arbeitsposition entspricht, welche aus dem Verschwenkungswinkel des Bildschirms berechnet werden kann. So wird auch dann, wenn der Bildschirm, der zur Ausgabe dient, zwischen mehreren solchen Positionen verschwenkt wird, eine leicht nachvollziehbare Anzeige der Ausrichtung und/oder Positionierung des Werkstücks erreicht.

Schließlich ist es gemäß einer weiteren bevorzugten Ausführungsform vorgesehen, dass eine mit dem Steuerungsrechner signaltechnisch verbundene Etikettierungsvorrichtung vorhanden ist, welche ausgebildet ist, um ein Werkstück oder Werkstückabschnitte mit einem alls Kennzeichnung dienenden Etikett zu versehen, wobei der Steuerungsrechner ausgebildet ist, um die Kennzeichnung über die graphische Ausgabeeinheit auszugeben und dem jeweiligen Werkstück/Werkstückabschnitt zuzuordnen. Diese Etikettierungsvorrichtung kann insbesondere individuell bewegiich/verfahrbar sein.

Ein weiterer Aspekt der Erfindung ist eine Formatkreissäge mit einer Werkstückauflagefläche und einem Kreissägeblatt, das relativ zu der Werkstückauflagefläche bewegbar ist, die durch eine Steuerungsvorrichtung der zuvor beschriebenen Art fortgebildet ist.

Schließlich ist ein weiterer Aspekt der Erfindung ein Verfahren zur Steuerung einer Formatkreissäge, mit den Schritten:
a) Eingeben der Werkstückmaße über eine Benutzerschnittstelle in einen Steuerungsrechner,
b) Berechnen der Lage und Ausrichtung der durchzuführenden Sägeschnitte mittels des Steuerungsrechners,
c) Anzeigen der Lage und/oder Ausrichtung des Werkstücks auf einer Werkstückauflagefläche über eine graphische Benutzerschnittstelle,
d) Durchführen eines Sägeschnittes, gegebenenfalls nach Registrierung eines Signals, welches die korrekte Positionierung und Lage des Werkstücks signalisiert,
e) Gegebenfalls Wiederholen der Schritte c) und d) bis alle erforderlichen Sägeschnitte ausgeführt sind.

Das Verfahren kann fortgebildet werden, indem entweder in einem ersten Arbeitsgang eine Mehrzahl von parallelen Sägeschnitten ausgeführt wird, die hierbei entstehenden Werkstückabschnitte zwischengelagert werden und in einem zweiten Arbeitsgang mittels einem oder mehreren Sägeschnitten, die schräg, insbesondere senkrecht zu den parallelen Sägeschnitten liegen, zugeschnitten werden oder indem in einem ersten Arbeitsgang ein Werkstückabschnitt vom Werkstück abgetrennt und in einem hierauf unmittelbar folgenden zweiten Arbeitsgang dieser Werkstückabschnitt mittels einem oder mehreren Sägeschnitten, die schräg, insbesondere senkrecht zu dem Sägeschnitt des ersten Arbeitsganges liegen, zugeschnitten wird, und gegebenenfalls dieser erste und zweite Arbeitsgang in Folge mehrfach wiederholt wird, bis alle Werkstückabschnitte hergestellt sind, wobei vorzugsweise nach Wahl des Benutzers die eine oder die andere Bearbeitungsreihenfolge ausgeführt wird.

Schließlich kann das Verfahren weiter fortgebildet werden, indem dem Benutzer ein für die Durchführung eines Sägeschnittes einzustellendes Einstellmaß einer Anschlagklappe angezeigt und/oder eine Anschlagklappe auf ein solches Einstellmaß verfahren wird.

Eine bevorzugte Ausführungsform der Erfindung wird anhand der beiliegenden Figuren beschrieben. Es zeigen:

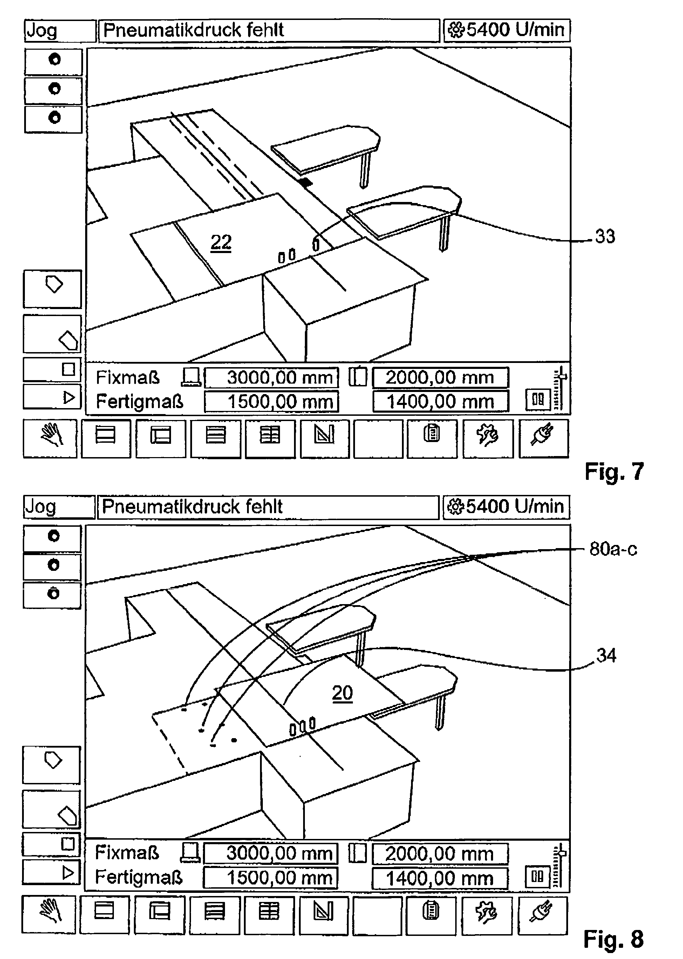

- Fig. 1 - 8: eine Abfolge einer Visualisierung eines Bearbeitungsvorgangs einer Werkstückplatte,
- Fig. 9 - 13: eine Abfolge einer Visualisierung einer Plattenaufteilung nach einer ersten Ausführungsform der Erfindung,
- Fig. 14 - 18: eine Abfolge einer Visualisierung einer Plattenaufteilung nach einer zweiten Ausführungsform, und
- Fig. 19 - 21: eine Abfolge einer Visualisierung des Zuschnitts mit Winkelschnitten.

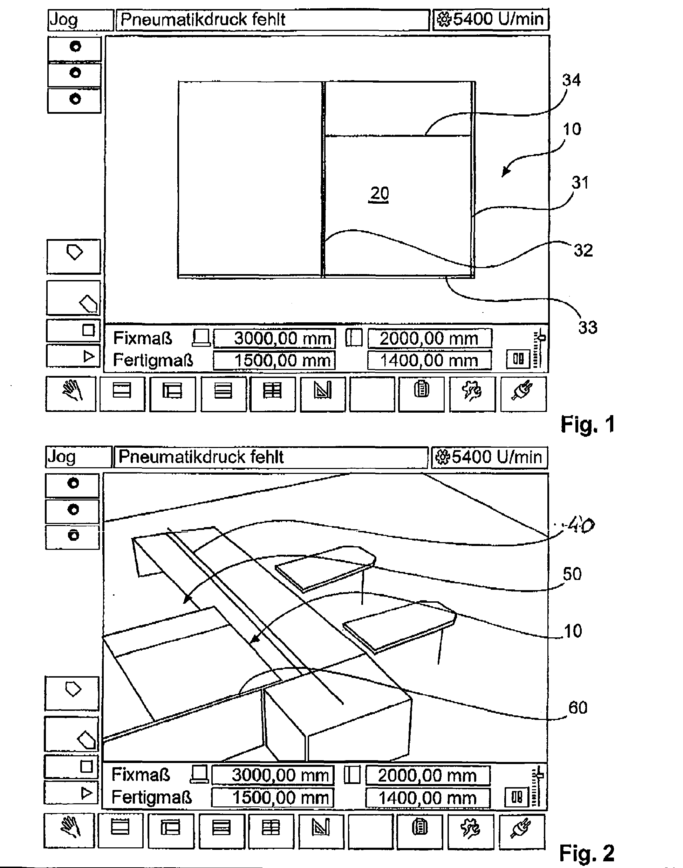

Fig. 1 zeigt einen Monitor beim Arbeitsgang "Formatieren". Dargestellt ist eine Platte 10 mit einem Plattenrohmaß von 3.000x2.000 mm, aus der ein Werkstückabschnitt 20 von 1.500x1.400 mm zugeschnitten werden soll. Die Maße sind entlang der Kanten des Werkstücks visualisiert, ebenso sind die durchzuführenden Sägeschnitte mittels feiner Linien 31-34 im Werkstück visualisiert.

Um eine saubere allseitige Kante am späteren Werkstück zu erhalten, sind Besäumschnitte 31, 33 visualisiert, mit denen jeweils ein schmaler Streifen mit einer Besäumschnittstreifenbreite an den Kanten des Werkstücks abgeschnitten wird, dessen Breite gerade so ausgelegt ist, dass der abgeschnittene Streifen nicht durch den Sägeschlitz in die Formatkreissäge fallen kann.

Sobald der Bediener die Schaltfläche "Start" betätigt, erscheint das Monitorbild gemäß Fig. 2. In Fig. 2 wird dem Bediener die Formatkreissäge mit einem Sägeschlitz 40, einer Werkstückauflagefläche 50 und einer Anschlagschiene 60 visualisiert. Die Anlegesituation des Werkstücks 10 in der Positionierung und Ausrichtung, welche für die Durchführung des zuerst durchzuführendem Besäumschnittes 31 erforderlich ist, wird auf der Werkstückauflagefläche 40 und an der Anschlagschiene 60 visualisiert.

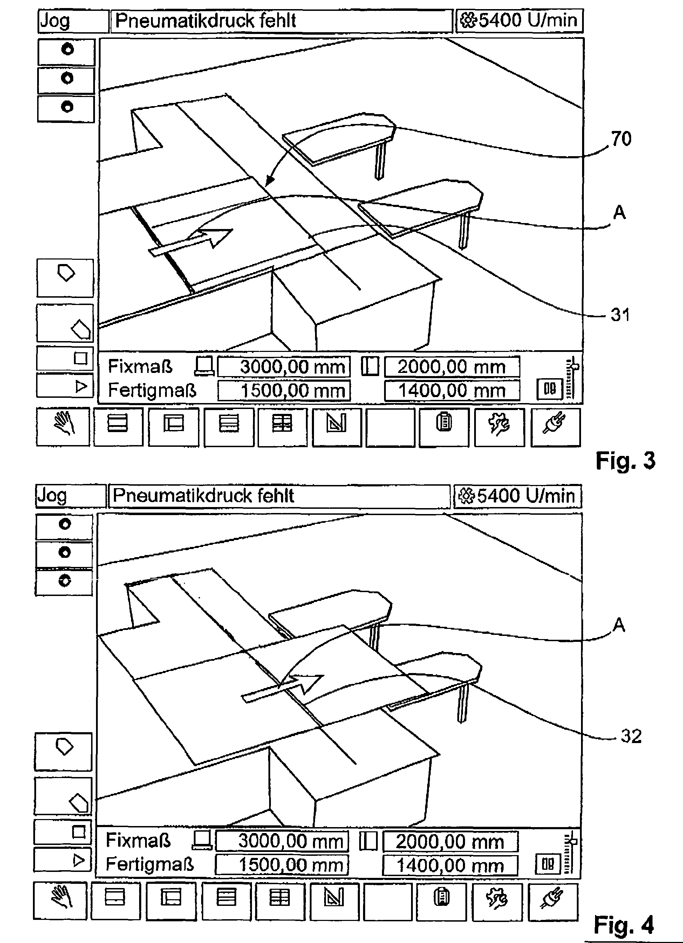

Wie in Fig. 3 zu erkennen ist, wird nachfolgend eine Visualisierung ausgegeben, die signalisiert, dass die Platte durch entsprechende Zustellbewegung in Richtung A auf den Sägeschlitz solcher Art positioniert wird soll, dass der Besäumschnitt dann durch Verfahren eines Kreissägeblatts 70 durchgeführt werden kann.

Hierauf folgend wird, wie in Fig. 4 zu erkennen ist, eine Visualisierung ausgegeben, die signalisiert, dass das Werkstück weiter in Zustellbewegung A nach rechts verschoben damit der erste Formatschnitt 32 durchgeführt werden kann.

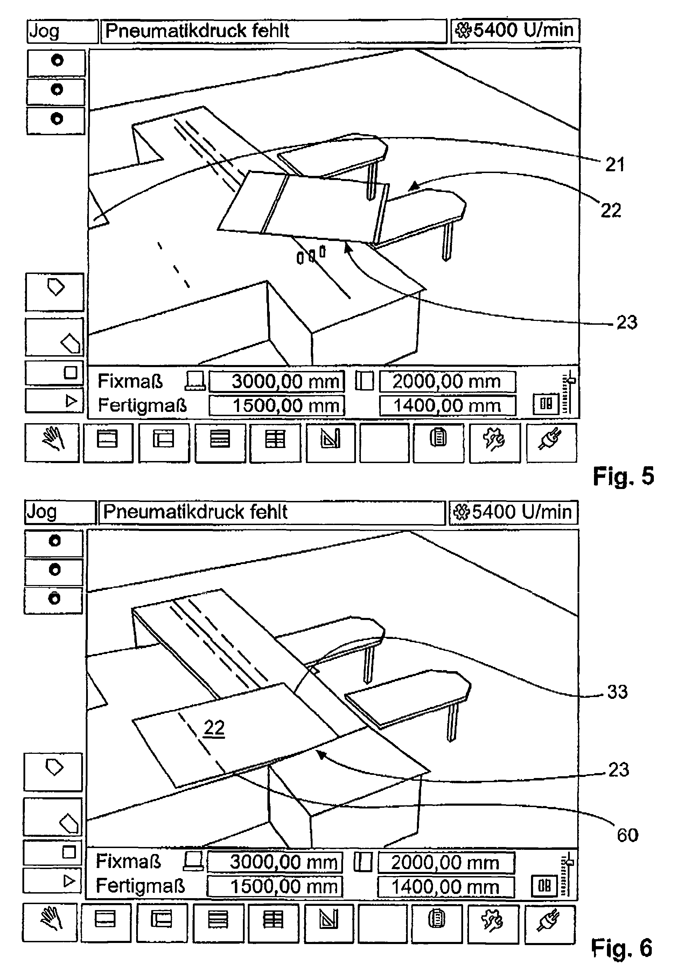

Fig. 5 zeigt eine Visualisierung nach dem ersten Formatschnitt 31, die dem Benutzer signalisiert, dass einerseits der linksliegende abgetrennte Werkstückabschnitt 21 nicht mehr gebraucht wird und nach oben links auf die Werkstückauflage 50 zurückgeschoben werden kann. Darüber hinaus wird dem Benutzer signalisiert, dass die rechtliegende abgeschnittene Platte 22 zurückgeholt und um 90° gedreht werden muss. Dies erfolgt, indem eine entsprechende Abfolge von Verschwenklagen dieses Werkstückabschnitts 22 visualisiert wird.

Wie in der Visualisierung gemäß Fig. 6 zu erkennen ist, wird dem Benutzer anschließend signalisiert, dass der Werkstückabschnitt 22 nun mit einer anderen Kante 23 an die Anschlagschiene angelegt werden muss, um den zweiten Besäumschnitt 33 durchführen zu können. Hierzu wird das Werkstück mittels Vorschubschlitten 80 a-c nach links verschoben, bis die zu besäumende Kante von einem Sensor im Bereich des Sägeschlitzes erfasst wurde und nachfolgend um einen bestimmten Betrag nach rechts verschoben und dann der Besäumschnitt 33 durchgeführt.

Hierauf folgend wird eine Visuallisierung ausgegeben, wonach der Werkstückabschnitt wiederum weiter nach rechts zugestellt und der zweite Formatschnitt 34 ausgeführt, womit das Teil 20 fertig zugeschnitten ist.

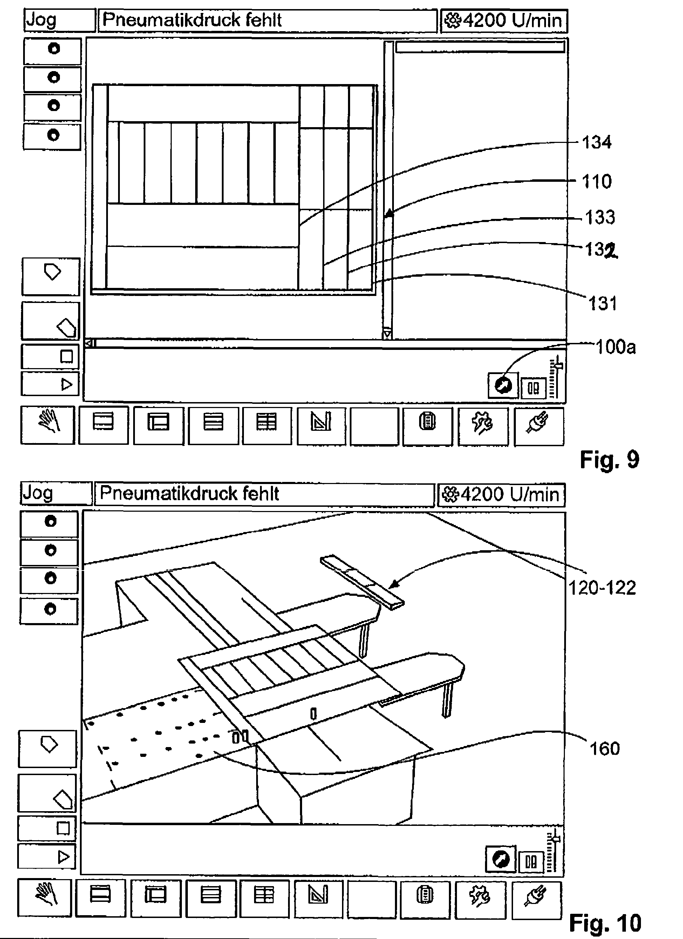

Fig. 9 zeigt eine Planungsdarstellung für den Zuschnitt mehrerer Werkstückabschnitte aus einer großen Werkstückplatte 110. Im Monitor unten rechts ist ein Pfeil 100a abgebildet, der nach rechts oben zeigt und hierdurch die Wahl des Benutzers für einen Zuschnittsvorgang nach einer ersten Vorgehensweise anzeigt.

Bei dieser ersten Vorgehensweise werden, wie in Fig. 10 zu erkennen ist, ein Besäumschnitt 131 und drei parallel hierzu liegende Schnitte 132-134 im rechten Teil des Werkstücks zuerst durchgeführt und die hierbei entstehenden Streifen 120-122 in einem virtuellen Lager in der Darstellung visualisiert. Die hierfür erforderlichen Arbeitsschritte werden dem Benutzer entsprechend visualisiert und automatisiert durchgeführt, nachdem der Benutzer die der Visualisierung entsprechenden Anlege - und Positionierungsvorgänge in Bezug auf die Anlegeschiene 160 ausgeführt hat.

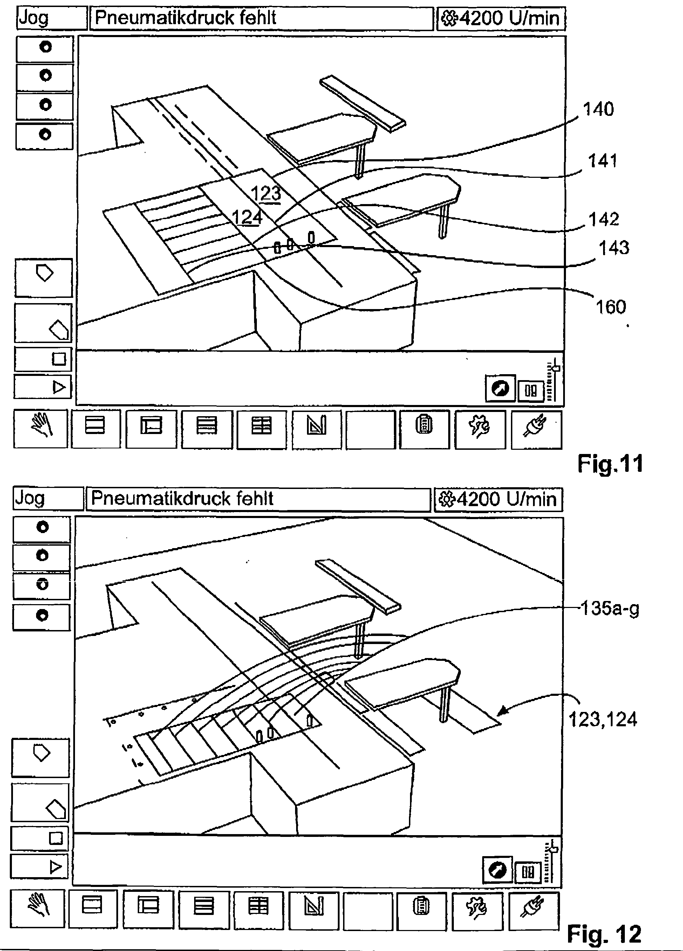

Hierauf folgend wird, wie in Fig. 11 gezeigt, eine Visualisierung ausgegeben, wonach die Platte um 90° gedreht und wiederum an die Anschlagkante 160 angelegt werden muss, um nachfolgend weiter durch entsprechende parallel liegende Schnitte aufgeteilt, wodurch erste fertig bearbeitete Werkstückabschnitte 123, 124 entstehen, die in Fig. 12 in einem endgültigen Lager abgebildet sind.

Dem Benutzer wird erneut eine 90° Drehung des Werkstücks und ein Anlegen an die Anschlagkante signalisiert. Hierauffolgend werden die Sägeschnitte 135a-g durchgeführt, um die hierdurch entstehenden Fertigteile zu erhalten.

Als letzter Vorgang werden die aus dem virtuellen Lager stammenden Streifen 120-122 wieder auf die Werkstückauflagefläche aufgelegt und dies dem Bediener in entsprechender Weise durch Visualisierung signalisiert und dann an diesen Streifen die Zuschnitte zur Herstellung der Fertigteile aufgeführt. Die hierfür erforderlichen Arbeitsschritte werden dem Benutzer wiederum entsprechend visualisiert und automatisiert durchgeführt, nachdem der Benutzer die der Visualisierung entsprechenden Anlege- und Positionierungsvorgänge ausgeführt hat.

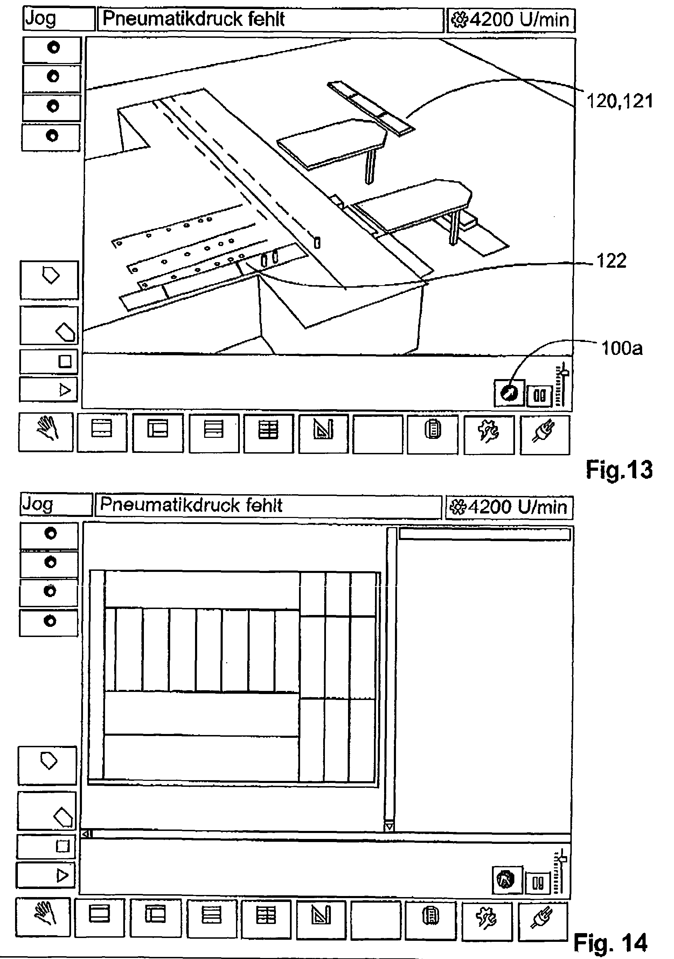

Fig. 14 zeigt eine gleiche Aufteilung einer Werkstückplatte nach einer zweiten Ausführungsform, die vom Bediener gewählt ist und durch den unten rechts im Monitor angezeigten, nach links oben weisenden Pfeil 100a signalisiert wird.

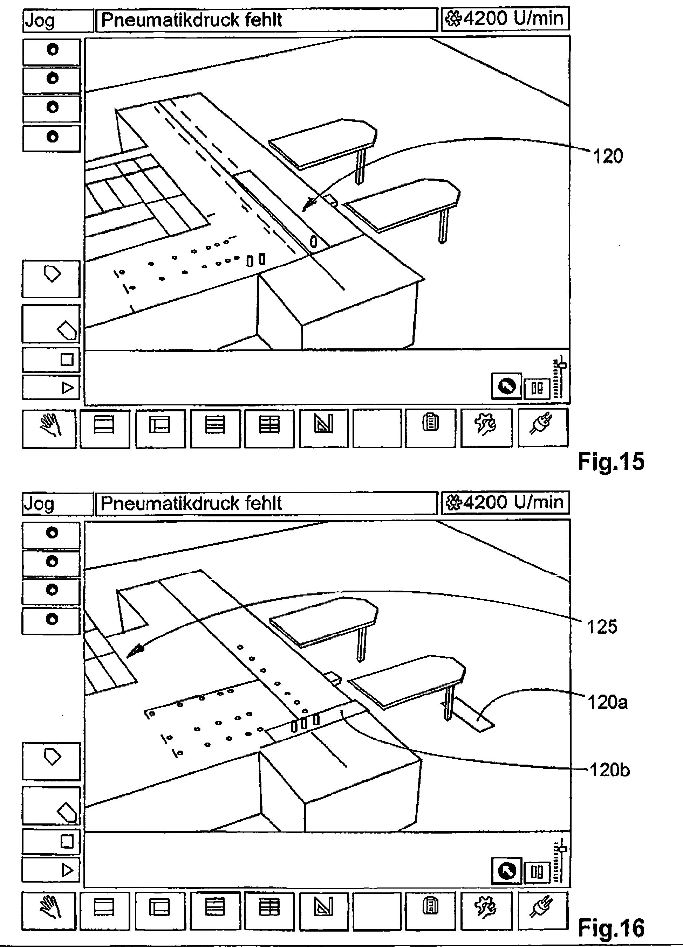

Bei dieser zweiten Vorgehensweise wird, wie in Fig. 15 zu erkennen ist, zunächst ein Streifen 120 abgeschnitten, wie dies auch bei der ersten Vorgehensweise erfolgt ist. Hierauf folgend werden jedoch nicht die weiteren parallelen Sägeschnitte durchgeführt, sondern signalisiert, dass das Werkstück 125 unmittelbar nach links oben auf die Werkstückauflagefläche zurückgeführt werden muss und dann, wie in Fig. 16 zu erkennen ist, der erste abgeschnittene Streifen 120 um 90° gedreht angelegt werden muss, was entsprechend visualisiert dargestellt wird, um ihn dann durch entsprechende Vorschubbewegungen in Fertigteile 120a,b aufzuschneiden.

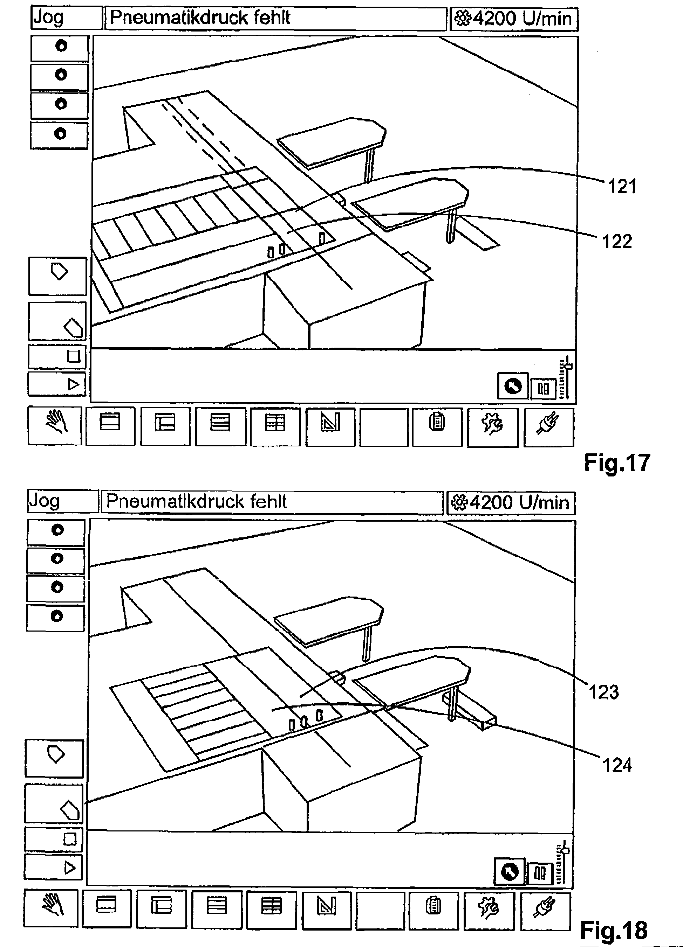

Diese Vorgehensweise wiederholt sich für den zweiten Streifen 121, wie in Fig. 17 dargestellt und die nachfolgenden Streifen und Werkstückabschnitte, für die jeweils eine Visualisierung für den unmittelbaren Zuschnitt in Fertigteile ausgegeben wird, wie in Fig. 17 und 18 dargestellt.

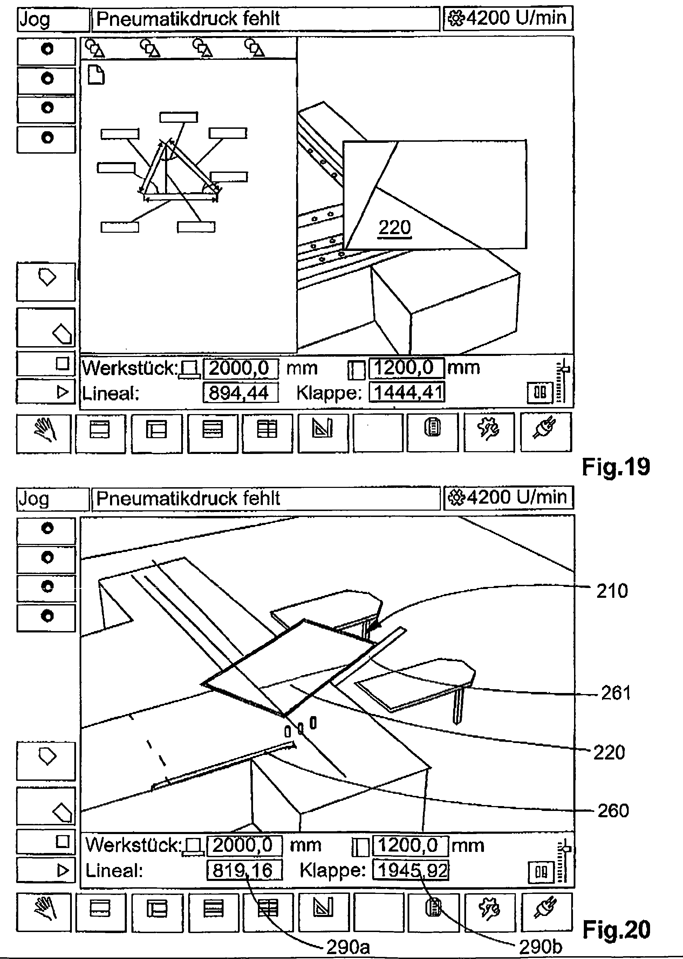

Fig. 19 zeigt die Herstellung eines dreieckigen Werkstückabschnitts 220. Hierzu wird dieser Werkstückabschnitt zunächst durch entsprechende Winkel und Maße und gegebenfalls weitere Werkstückkennwerte wie Stärke und Materialart vom Bediener beschrieben, indem die Geometrie/Außenkontur eingegeben wird. Hierbei wird dem Benutzer durch eine farbliche Visualisierung signalisiert, falls die Plattenmaße für den gewünschten Werkstückabschnitt zu klein sind.

Nach entsprechender Eingabe der gewünschten Werkstückabmessungen berechnet der Steuerungsrechner die hierfür erforderlichen Einstellungen an der Maschine und gibt diese als Werte 290a,b für das Lineal und die Anschlagklappe an den Benutzer aus. Der Benutzer kann daraufhin das Lineal und die Anschlagklappe auf die angezeigten Werte einstellen und den Winkel in gewünschter Weise schneiden.

Wie man in Fig. 20 erkennt, wird der Benutzer hierbei durch die Visualisierung unterstützt, indem ihm sowohl die Lage einer verschwenkbaren Anschlagschiene 261, die sich bei Einstellen der entsprechenden Werte ergeben muss, als auch die Positionierung und Ausrichtung des Werkstücks 210 an der Anlageschiene visualisiert wird.

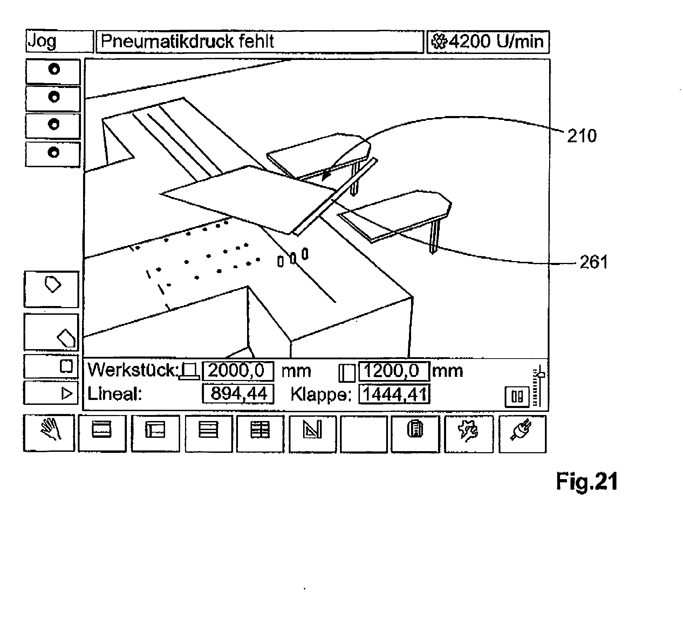

Fig. 21 zeigt die Situation zur Durchführung des zweiten Sägeschnitts, mit dem das Teil fertig bearbeitet wird.

## Patentansprüche

1. Steuerungsvorrichtung für eine Formatkreissäge, umfassend:
- eine graphische Ausgabeeinheit zur Anzeige von Betriebsdaten an einen Benutzer,
- eine Schnittstelle zur Eingabe von Werkstückabmessungen,
- einen mit der graphischen Ausgabeeinheit und der Schnittstelle signaltechnisch gekoppelten Steuerungsrechner zur Steuerung von Betriebsdaten der Formatkreissäge,
**dadurch gekennzeichnet, dass**
der Steuerungsrechner ausgebildet ist,
- um aus den von der Schnittstelle erhaltenen Werkstückabmessungen zu berechnen, in welcher Position und Ausrichtung das Werkstück auf eine Auflagefläche einer Formatkreissäge aufgelegt werden muss und
- um Daten, welche diese Position bzw. Ausrichtung charakterisieren, an die graphische Anzeige zu übermitteln
und dass die graphische Ausgabeeinheit ausgebildet ist, um einem Benutzer diese Position und. Ausrichtung anzuzeigen.

2. Steuerungsvorrichtung nach Anspruch 1,
**dadurch gekennzeichnet, dass** die Schnittstelle zur Eingabe von Werkstückabmessungen eine Benutzerschnittstelle umfasst, mittels derer ein Benutzer Werkstückabmessungen digital eingeben kann und/oder eine Datenschnittstelle umfasst, mittels derer Werkstückabmessungen von einer externen Datenquelle, insbesondere einem CAD-CAM-Planungsrechner eingelesen werden können.

3. Steuerungsvorrichtung nach einem der vorhergehenden Ansprüche,
**dadurch gekennzeichnet, dass** der Steuerungsrechner ausgebildet ist, um Position und/oder Ausrichtung für die aufeinanderfolgende Durchführung mehrerer Sägeschnitte an einem Werkstück zu berechnen und nach jedem durchgeführten Sägeschnitt Daten, welche die Position bzw. Ausrichtung des Werkstücks für den darauf folgenden Sägeschnitt charakterisieren, an die graphische Anzeige zu übermitteln und/oder ausgebildet ist, um eine für die Ausführung eines nachfolgenden Sägeschnittes einzustellende Position einer beweglichen Anschlagklappe zu berechnen und über die graphische Ausgabeeinheit auszugeben und/oder einen Aktuator zum Bewegen der Anschlagklappe so anzusteuern, dass dieser Aktuator die Anschlagklappe auf die Position bewegt.

4. Steuerungsvorrichtung nach einem der vorhergehenden Ansprüche,
**dadurch gekennzeichnet, dass** der Steuerungsrechner ausgebildet ist, um in einem ersten Bearbeitungsgang die für die Ausführung aufeinanderfolgender parallel liegender Sägeschnitt erforderliche Position und/oder Ausrichtung, des Werkstücks zu berechnen und über die graphische Anzeigeeinheit auszugeben und in einem zweiten Arbeitsgang die für die Ausführung aufeinanderfolgender parallel liegender Sägeschnitte an den im ersten Arbeitsgang hergestellten Werkstückabschnitten erforderliche Position und/oder Ausrichtung, des jeweiligen Werkstückabschnitts zu berechnen und über die graphische Anzeigeeinheit auszugeben.

5. Steuerungsvorrichtung nach einem der vorhergehenden Ansprüche,
**dadurch gekennzeichnet, dass** der Steuerungsrechner ausgebildet ist, um
a. in einem ersten Bearbeitungsgang die für die Ausführung eines ersten Trennsägeschnitt zur Abtrennung eines ersten Werkstückabschnitts erforderliche Position und/oder Ausrichtung, des Werkstücks zu berechnen und über die graphische Anzeigeeinheit auszugeben ,
b. in einem zweiten Bearbeitungsgang die für die Ausführung zumindest eines an diesem ersten Werkstückabschnitt unter einem Winkel zum ersten Trennsägeschnitt an dem im ersten Bearbeitungsgang hergestellten Werkstückabschnitt durchzuführende Sägeschnitte erforderliche Position und/oder Ausrichtung, des ersten Werkstückabschnitts zu berechnen und über die graphische Anzeigeeinheit auszugeben,
c. in einem n-ten Bearbeitungsgang die für die Ausführung eines weiteren Trennsägeschnitt zur Abtrennung eines weiteren Werkstückabschnitts erforderliche Position und/oder Ausrichtung, des Werkstücks zu berechnen und über die graphische Anzeigeeinheit auszugeben ,
d. in einem n+1-ten Bearbeitungsgang die für die Ausführung zumindest eines an diesem weiteren Werkstückabschnitt unter einem Winkel zum weiteren Trennsägeschnitt an an dem im n-ten Bearbeitungsgang hergestellten weiteren Werkstückabschnitt durchzuführende Sägeschnitte erforderliche Position und/oder Ausrichtung, des weiteren Werkstückabschnitts zu berechnen und über die graphische Anzeigeeinheit auszugeben,
e. die Schritte c. und d. solange zu weiderholen, bis alle aus dem Werkstück herzustellenden Werkstückabschnitte zugeschnitten sind.

6. Steuerungsvorrichtung nach den vorhergehenden Ansprüchen 4 und 5,
**gekennzeichnet durch** eine Benutzerschnittstelle, welche mit dem Steuerungsrechner signaltechnisch gekoppelt ist und über die ein Benutzer eine Auswahl treffen kann, ob der Steuerungsrechner die Bearbeitung eines Werkstücks anhand der in Anspruch 4 definierten Bearbeitungsfolge oder anhand der in Anspruch 5 definierten Bearbeitungsfolge durchführen soll.

7. Steuerungsvorrichtung nach einem der vorhergehenden Ansprüche,
**dadurch gekennzeichnet, dass** der Steuerungsrechner ausgebildet ist, um jedem durch die Ausführung der Sägeschnitte entstehenden Werkstückabschnitte eine Kennzeichnung zuzuordnen und diese Kennzeichnung zusammen mit der Position bzw. Ausrichtung des jeweiligen Werkstückabschnitts über die graphische Anzeigeeinheit auszugeben.

8. Steuerungsvorrichtung nach einem der vorhergehenden Ansprüche oder dem Oberbegriff von Anspruch 1.
**dadurch gekennzeichnet, dass** der Steuerungsrechner mit einem Aktuator zur Steuerung der Vorschubgeschwindigkeit zwischen dem Kreissägeblatt und dem Werkstück signaltechnisch verbunden ist und ausgebildet ist, um die Position des Eintritts und/oder des Austritts des Kreissägeblatts in das bzw. aus dem Werkstück zu berechnen und die Vorschubgeschwindigkeit beim Eintritt des Kreissägeblatts in das Werkstück und/oder beim Austritts des Kreissägeblatts aus dem Werkstück gegenüber der Vorschubgeschwindigkeit zwischen Ein- und Austritt zu verringern.

9. Steuerungsvorrichtung nach einem der vorhergehenden Ansprüche,
**dadurch gekennzeichnet, dass** der Steuerungsrechner ausgebildet ist, um aus Werkstückmaßen, welche einen Winkel- oder Gehrungsschnitt erforderlich machen, Sollpositionen einer Anschlagklappe und/oder einer Anschlagschiene zu berechnen und dem Benutzer über die graphische Ausgabeeinheit anzuzeigen.

10. Steuerungsvorrichtung nach einem der vorhergehenden Ansprüche,
**dadurch gekennzeichnet, dass** die graphische Ausgabeeinheit einen Bildschirm umfasst, der beweglich ist, insbesondere um eine Schwenkachse schwenkbar gelagert ist und dass der Steuerungsrechner mit einem Sensor, insbesondere einem Winkelsensor signaltechnisch verbunden ist, welcher die Position des Bildschirms bzw. die Schwenkposition des Bildschirms um die Schwenkachse erfasst und dass der Steuerungsrechner ausgebildet ist, um die Position und/oder Ausrichtung des Werkstücks auf der Werkstückablagefläche über die graphische Ausgabeeinheit entsprechend eines solchen Blickwinkels auszugeben, der dem Blickwinkel eines Benutzers entspricht, der vor dem Bildschirm in der erfassten Position bzw. Schwenkstellung steht.

11. Steuerungsvorrichtung nach einem der vorhergehenden Ansprüche,
**gekennzeichnet durch** eine mit dem Steuerungsrechner signaltechnisch verbundene Etikettierungsvorrichtung, welche ausgebildet ist, um ein Werkstück oder Werkstückabschnitte mit einem als Kennzeichnung dienenden Etikett zu versehen, wobei der Steuerungsrechner ausgebildet ist, um die Kennzeichnung über die graphische Ausgabeeinheit auszugeben und dem jeweiligen Werkstück/Werkstückabschnitt zuzuordnen.

12. Formatkreissäge mit einer Werkstückauflagefläche und einem Kreissägeblatt, welches relativ zu der Werkstückauflagefläche bewegbar ist, **gekennzeichnet durch** eine Steuerungsvorrichtung nach einem der vorhergehenden Ansprüche.

13. Verfahren zur Steuerung einer Formatkreissäge, mit den Schritten:
a. Eingeben der Werkstückmaße über eine Benutzerschnittstelle in einen Steuerungsrechner,
b. Berechnen der Lage und Ausrichtung der durchzuführenden Sägeschnitte mittels des Steuerungsrechners,
c. Anzeigen der Lage und Ausrichtung des Werkstücks auf einer Werkstückauflagefläche über eine graphische Benutzerschnittstelle,
d. Durchführen eines Sägeschnittes, gegebenenfalls nach Registrierung eines Signals, welches die korrekte Positionierung und Lage des Werkstücks signalisiert,
e. Gegebenenfalls Wiederholen der Schritte c) und d) bis alle erforderlichen Sägeschnitte ausgeführt sind.

14. Verfahren nach Anspruch 13,
**dadurch gekennzeichnet,**
- **dass** entweder in einem ersten Arbeitsgang eine Mehrzahl von parallelen Sägeschnitten ausgeführt wird, die hierbei entstehenden Werkstückabschnitte zwischengelagert werden und in einem zweiten Arbeitsgang mittels einem oder mehreren Sägeschnitten, die schräg, insbesondere senkrecht zu den parallelen Sägeschnitten liegen, zugeschnitten werden oder
- **dass** in einem ersten Arbeitsgang ein Werkstückabschnitt vom Werkstück abgetrennt und in einem hierauf unmittelbar folgenden zweiten Arbeitsgang dieser Werkstückabschnitt mittels einem oder mehreren Sägeschnitten, die schräg, insbesondere senkrecht zu dem Sägeschnitt des ersten Arbeitsganges liegen, zugeschnitten wird, und gegebenenfalls dieser erste und zweite Arbeitsgang in Folge mehrfach wiederholt wird, bis alle Werkstückabschnitte hergestellt sind,
wobei vorzugsweise nach Wahl des Benutzers die eine oder die andere Bearbeltungsreihenfolge ausgeführt wird.

15. Verfahren nach Anspruch 13 oder 14,
**dadurch gekennzeichnet, dass** dem Benutzer ein für die Durchführung eines Sägeschnittes einzustellendes Einstellmaß einer Anschlagklappe angezeigt und/oder eine Anschlagklappe auf ein solches Einstellmaß verfahren wird.

## Claims

1. Control device for a sizing circular saw, comprising:
- a graphical output unit for indicating operating data to a user,
- an interface for entering workpiece dimensions,
- a control computer, coupled by a signalling system with the graphical output unit and with the interface, for controlling operating data of the sizing circular saw,
**characterised in that**
the control computer is configured
- to calculate, from the workpiece dimensions received from the interface, in which position and orientation the workpiece has to be laid onto a bearing surface of a sizing circular saw and
- to transmit data to the graphical display that characterise this position and orientation,
and **in that** the graphical output unit is configured to indicate this position and orientation to a user.

2. Control device according to Claim 1,
**characterised in that** the interface for entering workpiece dimensions includes a user interface, by means of which a user can enter workpiece dimensions digitally, and/or includes a data interface, by means of which workpiece dimensions can be read in from an external data source, in particular from a CAD-CAM planning computer.

3. Control device according to one of the preceding claims,
**characterised in that** the control computer is configured to calculate the position and/or orientation for the successive implementation of several saw cuts on a workpiece and, after each saw cut implemented, to transmit data to the graphical display that characterise the position and orientation of the workpiece for the following saw cut, and/or is configured to calculate a position of a movable stop flap to be set for the execution of a subsequent saw cut and to output said position via the graphical output unit and/or to drive an actuator for moving the stop flap in such a way that this actuator moves the stop flap to said position.

4. Control device according to one of the preceding claims,
**characterised in that** the control computer is configured to calculate, and to output via the graphical display unit, in a first machining operation, the position and/or orientation of the workpiece required for the execution of successive parallel saw cuts, and to calculate, and to output via the graphical display unit, in a second working operation, the position and/or orientation of the respective workpiece section required for the execution of successive parallel saw cuts on the workpiece sections produced in the first working operation.

5. Control device according to one of the preceding claims,
**characterised in that** the control computer is configured
a. to calculate, and to output via the graphical display unit, in a first machining operation, the position and/or orientation of the workpiece required for the execution of a first separating saw cut for severing a first workpiece section,
b. to calculate, and to output via the graphical display unit, in a second machining operation, the position and/or orientation of the first workpiece section required for the execution of at least one saw cut to be implemented on this first workpiece section at an angle to the first separating saw cut on the workpiece section produced in the first machining operation,
c. to calculate, and to output via the graphical display unit, in an nth machining operation, the position and/or orientation of the workpiece required for the execution of a further separating saw cut for severing a further workpiece section,
d. to calculate, and to output via the graphical display unit, in an (n+1)th machining operation, the position and/or orientation of the further workpiece section required for the execution of at least one saw cut to be implemented on this further workpiece section at an angle to the further separating saw cut on the further workpiece section produced in the nth machining operation,
e. to repeat steps c. and d. until such time as all the workpiece sections to be produced from the workpiece have been cut to size.

6. Control device according to the preceding Claims 4 and 5,
**characterised by** a user interface which is coupled by a signalling system with the control computer and via which a user can make a selection as to whether the control computer is to implement the machining of a workpiece on the basis of the machining sequence defined in Claim 4 or on the basis of the machining sequence defined in Claim 5.

7. Control device according to one of the preceding claims,
**characterised in that** the control computer is configured to assign an identifier to each workpiece section arising by virtue of the execution of the saw cuts and to output this identifier together with the position and/or orientation of the respective workpiece section via the graphical display unit.

8. Control device according to one of the preceding claims or according to the precharacterising portion of Claim 1,
**characterised in that** the control computer is connected by a signalling system to an actuator for controlling the rate of feed between the circular saw blade and the workpiece and is configured to calculate the position of the entry and/or exit of the circular saw blade into and/or out of the workpiece and to reduce the rate of feed upon entry of the circular saw blade into the workpiece and/or upon exit of the circular saw blade from the workpiece in comparison with the rate of feed between entry and exit.

9. Control device according to one of the preceding claims,
**characterised in that** the control computer is configured to calculate, and to indicate to the user via the graphical output unit, desired positions of a stop flap and/or of a stop bar from workpiece measurements that necessitate an angle cut or a mitre cut.

10. Control device according to one of the preceding claims,
**characterised in that** the graphical output unit includes a screen that is movable, in particular is supported so as to be capable of swivelling about a swivel axis, and **in that** the control computer is connected by a signalling system to a sensor, in particular an angle sensor, which registers the position of the screen, respectively the swivel position of the screen about the swivel axis, and **in that** the control computer is configured to output the position and/or orientation of the workpiece on the workpiece bearing surface via the graphical output unit in accordance with a viewing angle that corresponds to the viewing angle of a user standing in front of the screen in the registered position, respectively in the swivel position.

11. Control device according to one of the preceding claims,
**characterised by** a labelling device connected by a signalling system to the control computer, said labelling device being configured to provide a workpiece or workpiece sections with a label serving as identifier, the control computer being configured to output the identifier via the graphical output unit and to assign it to the respective workpiece or workpiece section.

12. Sizing circular saw with a workpiece bearing surface and with a circular saw blade which is mobile relative to the workpiece bearing surface, **characterised by** a control device according to one of the preceding claims.

13. Process for controlling a sizing circular saw, with the following steps:
a. entering the workpiece measurements into a control computer via a user interface,
b. calculating, by means of the control computer, the location and orientation of the saw cuts to be implemented,
c. indicating, via a graphical user interface, the location and orientation of the workpiece on a workpiece bearing surface,
d. implementing a saw cut, optionally after registering a signal that indicates the correct positioning and location of the workpiece,
e. optionally, repeating steps c) and d) until all the required saw cuts have been executed.

14. Process according to Claim 13,
**characterised**
- **in that** in a first working operation a plurality of parallel saw cuts are executed, the workpiece sections arising are stored temporarily and are cut to size in a second working operation by means of one or more saw cuts that lie obliquely, in particular perpendicularly, in relation to the parallel saw cuts or
- **in that** in a first working operation a workpiece section is severed from the workpiece and in a second working operation following immediately afterwards this workpiece section is cut to size by means of one or more saw cuts that lie obliquely, in particular perpendicularly, in relation to the saw cut of the first working operation, and optionally these first and second working operations are repeated several times in succession until all the workpiece sections have been produced,
the one or the other machining sequence being executed, preferentially according to the choice of the user.

15. Process according to Claim 13 or 14,
**characterised in that** a setting dimension of a stop flap to be set for the implementation of a saw cut is indicated to the user and/or a stop flap is displaced to such a setting dimension.

## Revendications

1. Dispositif de commande pour une scie circulaire à format, comprenant :
- une unité de sortie graphique pour afficher des données de fonctionnement à un utilisateur,
- une interface pour la saisie de dimensions de pièces à oeuvrer,
- un calculateur de commande couplé par signaux à l'unité de sortie graphique et à l'interface pour la commande de données de fonctionnement de la scie circulaire à format,
**caractérisé en ce que**
le calculateur de commande est réalisé
- pour calculer, à partir des dimensions des pièces à oeuvrer reçues de l'interface, dans quelle position et quelle orientation la pièce à oeuvrer doit être posée sur une surface de support d'une scie circulaire à format, et
- pour transmettre à l'afficheur graphique des données qui caractérisent cette position ou cette orientation,
et **en ce que** l'unité de sortie graphique est réalisée pour afficher à un utilisateur cette position ou cette orientation.

2. Dispositif de commande selon la revendication 1,
**caractérisé en ce que** l'interface comprend, pour la saisie de dimensions de pièces à oeuvrer, une interface utilisateur au moyen de laquelle un utilisateur peut saisir de façon numérique des dimensions de pièces à oeuvrer et/ou comprend une interface de données au moyen de laquelle des dimensions de pièces à oeuvrer peuvent être lues depuis une source de données externe, en particulier un calculateur de planification CAD-CAM (CAO-FAO).

3. Dispositif de commande selon l'une des revendications précédentes,
**caractérisé en ce que** le calculateur de commande est réalisé pour calculer la position et/ou l'orientation pour l'exécution successive de plusieurs coupes de scie sur une pièce à oeuvrer et, après chaque coupe de scie exécutée, pour transmettre à l'affichage graphique des données qui caractérisent la position ou l'orientation de la pièce à oeuvrer pour la coupe de scie suivante, pour calculer une position d'un volet de butée mobile, qu'il s'agit de régler pour l'exécution d'une coupe de scie successive et l'indiquer via l'unité de sortie graphique et/ou pour piloter un actionneur destiné à déplacer le volet de butée de telle façon que cet actionneur déplace le volet de butée à cette position.

4. Dispositif de commande selon l'une des revendications précédentes,
**caractérisé en ce que** le calculateur de commande est réalisé pour calculer dans une première passe d'usinage la position et/ou l'orientation, de la pièce à oeuvrer, nécessaire pour l'exécution de coupes de scie parallèles successives et l'indiquer via l'unité d'affichage graphique, et pour calculer dans une seconde passe d'usinage la position et/ou orientation, du tronçon de pièce à oeuvrer respectif, nécessaire pour l'exécution de coupes de scie parallèles successives sur les tronçons de pièces à oeuvrer réalisées dans la première passe d'usinage et l'indiquer via l'unité d'affichage graphique.

5. Dispositif de commande selon l'une des revendications précédentes,
**caractérisé en ce que** le calculateur de commande est réalisé pour
a) dans une première passe d'usinage, calculer la position et/ou orientation, de la pièce à oeuvrer, nécessaire pour l'exécution d'une première coupe de scie en séparation pour séparer un premier tronçon de pièce à oeuvrer et l'indiquer via l'unité d'affichage graphique,
b) dans une seconde passe d'usinage, calculer la position et/ou l'orientation, du premier tronçon de pièce à oeuvrer, nécessaire pour l'exécution d'au moins une coupe de scie qu'il s'agit d'exécuter sur ce premier tronçon de pièce à oeuvrer sous un angle par rapport à la première coupe de scie en séparation réalisée dans la première passe d'usinage et l'indiquer via l'unité d'affichage graphique,
c) dans une n-ième passe d'usinage, calculer la position et/ou l'orientation, de la pièce à oeuvrer, nécessaire pour l'exécution d'une coupe de scie suivante pour la séparation d'un autre tronçon de pièce à oeuvrer et l'indiquer via l'unité d'affichage graphique,
d) dans une n+1-ième passe d'usinage, calculer la position et/ou l'orientation, de l'autre tronçon de pièce à oeuvrer, nécessaire pour l'exécution d'au moins une coupe de scie à exécuter sur cet autre tronçon de pièce à oeuvrer sous un angle par rapport à l'autre coupe de scie en séparation sur l'autre tronçon de pièce à oeuvrer réalisé dans la n-ième passe d'usinage et l'indiquer via l'unité d'affichage graphique,
e) répéter les étapes c) et d) aussi longtemps que tous les tronçons de pièces à oeuvrer à réaliser à partir de la pièce à oeuvrer soient tronçonnés.

6. Dispositif de commande selon les revendications précédentes 4 et 5,
**caractérisé par** une interface utilisateur qui est couplée par signaux au calculateur de commande et au moyen de laquelle un utilisateur peut procéder à un choix si le calculateur de commande doit exécuter l'usinage de pièces à oeuvrer selon la succession d'usinage définie dans la revendication 4 ou selon la succession d'usinage définie dans la revendication 5.

7. Dispositif de commande selon l'une des revendications précédentes,
**caractérisé en ce que** le calculateur de commande est réalisé pour associer un signe caractéristique à chacun des tronçons de pièce à oeuvrer résultant de l'exécution des coupes de scie et pour indiquer ce signe caractéristique conjointement avec la position ou l'orientation du tronçon de pièce à oeuvrer respectif, via l'unité d'affichage graphique.

8. Dispositif de commande selon l'une des revendications précédentes ou selon le préambule de la revendication 1,
**caractérisé en ce que** le calculateur de commande est relié par signal à un actionneur, pour la commande de la vitesse d'avance entre la lame de scie circulaire et la pièce à oeuvrer, et est réalisé pour calculer la position de l'entrée et/ou de la sortie de la lame de scie circulaire dans la pièce à oeuvrer ou hors de celle-ci, et pour réduire la vitesse d'avance lors de l'entrée de la lame de scie circulaire dans la pièce à oeuvrer et/ou lors de la sortie de la lame de scie circulaire hors de la pièce à oeuvrer vis-à-vis de la vitesse d'avance entre l'entrée et la sortie.

9. Dispositif de commande selon l'une des revendications précédentes,
**caractérisé en ce que** le calculateur de commande est réalisé pour, à partir de dimensions de pièces à oeuvrer qui rendent nécessaires une coupe en angle ou une coupe en onglet, des positions de consigne d'un volet de butée et/ou d'un rail de butée et l'indiquer à l'utilisateur via l'unité de sortie graphique.

10. Dispositif de commande selon l'une des revendications précédentes,
**caractérisé en ce que** l'unité de sortie graphique comprend un écran qui est mobile, en particulier monté pivotant autour d'un axe de pivotement, et **en ce que** le calculateur de commande est relié par signal à un capteur, en particulier à un capteur angulaire, lequel détecte la position de l'écran ou respectivement la position en pivotement de l'écran autour de l'axe de pivotement, et **en ce que** le calculateur de commande est réalisé pour indiquer la position et/ou l'orientation de la pièce à oeuvrer sur la surface de support pour pièces à oeuvrer, via l'unité de sortie graphique de façon correspondante à un angle d'observation qui correspond à l'angle d'observation d'un utilisateur qui est debout devant l'écran dans la position donné ou en position tournée.

11. Dispositif de commande selon l'une des revendications précédentes,
**caractérisé par** un dispositif d'étiquetage relié techniquement au calculateur de commande vis-à-vis des signaux, qui est réalisé pour doter une pièce à oeuvrer ou un tronçon de pièce à oeuvrer d'une étiquette servant de signe caractéristique, et le calculateur de commande est réalisé pour indiquer le signe caractéristique via l'unité de sortie graphique et l'associer à la pièce à oeuvrer ou au tronçon de pièce à oeuvrer respectif.

12. Scie circulaire de format comprenant une surface de support pour pièce à oeuvrer et une lame de scie circulaire, qui est déplaçable par rapport à la surface de support pour pièce à oeuvrer, **caractérisée par** un dispositif de commande selon l'une des revendications précédentes.

13. Procédé de commande d'une scie circulaire à format, comprenant les étapes suivantes :
a) Saisir les dimensions d'une pièce à oeuvrer via une interface utilisateur dans un calculateur de commande,
b) calculer la position et l'orientation des coupes de scie à exécuter au moyen du calculateur de commande,
c) indiquer la position et l'orientation de la pièce à oeuvrer sur une surface de support pour pièce à oeuvrer, via une interface utilisateur graphique,
b) exécuter une coupe de scie, le cas échéant après constatation d'un signal qui indique le positionnement et la situation correct(e) de la pièce à oeuvrer,
e) répèter le cas échéant les étapes c) et d) jusqu'à avoir exécuté toutes les coupes de scie nécessaires.

14. Procédé selon la revendication 13,
**caractérisé en ce que**
- soit on exécute dans une première passe de travail une pluralité de coupes de scie parallèles, on entrepose temporairement les tronçons de pièces à oeuvrer ainsi réalisés et on les tronçonne dans une seconde passe de travail au moyen d'une ou plusieurs coupes de scie qui sont disposées en oblique et en particulier perpendiculairement aux coupes de scie parallèles,
- soit on sépare dans une première passe de travail un tronçon de pièce à oeuvrer vis-à-vis de la pièce à oeuvrer et ce second tronçon de pièce à oeuvrer est tronçonné dans une seconde passe de travail immédiatement successive, au moyen d'une ou plusieurs coupes de scie qui sont disposées en oblique et en particulier perpendiculairement à la coupe de scie de la première passe de travail et on répète le cas échéant en succession cette première passe de travail et cette seconde passe de travail, jusqu'à avoir réalisé tous les tronçons de pièces à oeuvrer,
et on exécute l'une ou l'autre des successions d'usinage de préférence d'après le choix de l'utilisateur.

15. Procédé selon la revendication 13 ou 14,
**caractérisé en ce que** l'on affiche pour l'utilisateur une mesure de réglage pour un volet de butée, qu'il s'agit de régler pour l'exécution d'une coupe de scie, et/ou **en ce que** l'on déplace un volet de butée jusqu'à une telle mesure de réglage.
